## Europäisches Patentamt
## European Patent Office
## Office européen des brevets

(19)

(11) Veröffentlichungsnummer: **0 064 262**
**B1**

(12)

# EUROPÄISCHE PATENTSCHRIFT

(45) Veröffentlichungstag der Patentschrift:
08.08.84

(51) Int. Cl.³: **H 04 L 11/02, H 04 L 17/00**

(21) Anmeldenummer: **82103581.3**

(22) Anmeldetag: **27.04.82**

(54) **Verfahren und Anordnung zum Erzeugen von Wählsignalen in Fernschreibmaschinen.**

(30) Priorität: **30.04.81 DE 3117283**

(43) Veröffentlichungstag der Anmeldung:
**10.11.82 Patentblatt 82/45**

(45) Bekanntmachung des Hinweises auf die Patenterteilung:
**08.08.84 Patentblatt 84/32**

(84) Benannte Vertragsstaaten:
**CH FR GB IT LI SE**

(56) Entgegenhaltungen:
**CH - A - 625 093**
**DE - A - 2 552 447**
**DE - C - 2 354 057**

**SIEMENS ZEITSCHRIFT, 50. Jahrgang, April 1976, Heft 4, Berlin und München, DE H. HELMRICH " Der Fernschreiber 1000" Seiten 185-189**

(73) Patentinhaber: **SIEMENS AKTIENGESELLSCHAFT, Berlin und München Wittelsbacherplatz 2, D-8000 München 2 (DE)**

(72) Erfinder: **Günther, Gerd-Joachim, Ing.grad., Gailenreuther Strasse 19, D-8000 München 60 (DE)**

## Beschreibung

Die Erfindung bezieht sich auf ein Verfahren zum Erzeugen von Wählsignalen in einer Fernschreibmaschine, bei dem nach dem Betätigen einer Anruftaste an der Fernschreibmaschine eine Vermittlungsstelle zum Eingeben von Wählzeichen auffordert, die einem fernen Teilnehmer zugeordnet sind, bei dem die Eingabe der Wählzeichen über die Tastatur der Fernschreibmaschine erfolgt, bei dem während des Wählvorganges in Abhängigkeit von den Wählzeichen Wählsignale erzeugt werden und bei dem, falls als Wählzeichen Ziffern eingegeben werden, diese in Wählsignale umgesetzt werden.

Zum Herstellen einer Verbindung zwischen zwei Fernschreibmaschinen mittels einer Vermittlungsstelle ist es allgemein bekannt, daß zunächst an der rufenden Fernschreibmaschine eine Anruftaste betätigt wird. Als Folge einer kurzen Unterbrechung der Fernschreibleitung durch die Vermittlungsstelle leuchtet an der rufenden Fernschreibmaschine eine Anruflampe auf, die den Teilnehmer zum Eingeben von dem fernen Teilnehmer zugeordneten Wählzeichen auffordert. Bei einer Nummernschalterwahl werden die Wählzeichen in einzelne Wählimpulse umgesetzt. Bei der Verwendung der Codewahl werden die Wählzeichen als Codewörter zur Vermittlungsstelle übertragen.

Aus der DE-C-2 354 057 ist es bekannt, bei einer Fernschreibmaschine die Wählsignale, d. h. die Wählimpulse oder die codierten Wählzeichen, unter Verwendung der alphanumerischen Tastatur einer Fernschreibmaschine einzugeben. Ein Wählsignalgeber setzt die beispielsweise mittels der Zifferntasten der Tastatur eingegebenen Wählzeichen in die Wählsignale um und gibt sie über eine Fernschalteinheit und eine Fernleitung an die Vermittlungsstelle ab.

Es ist bereits bekannt, in Fernsprechendgeräten einen Speicher vorzusehen, in dem eine Mehrzahl von Rufnummern von fernen Teilnehmern speicherbar ist. Jeder Rufnummer ist eine Taste zugeordnet, die beispielsweise mit dem Namen des fernen Teilnehmers beschriftet ist. Nach dem Betätigen dieser Taste werden die Wählzeichen aus dem Speicher ausgelesen und in Wählsignale umgesetzt, die zur Vermittlungsstelle übertragen werden.

Es wäre denkbar, an einer Fernschreibmaschine ebenfalls derartige Tasten vorzusehen, nach deren Betätigung die Wählzeichen von denjenigen fernen Teilnehmern, mit denen häufig eine Verbindung hergestellt wird, aus dem Speicher ausgelesen werden und in Wählsignale umgesetzt werden. Da die Fernschreibmaschine eine Tastatur mit verhältnismäßig vielen Tasten enthält, ist es für die Bedienung der Fernschreibmaschine nicht von Vorteil, wenn noch weitere Tasten vorgesehen werden. Außerdem müßte bei der Formgebung der Fernschreibmaschine auf diese zusätzlichen Tasten Rücksicht genommen werden, so daß ein kompakter Aufbau nicht mehr möglich wäre.

Der Erfindung liegt daher die Aufgabe zugrunde, ein Verfahren und eine Anordnung zum Erzeugen von Wählsignalen in Fernschreibmaschinen anzugeben, bei dem ohne Verwendung von weiteren Tasten an der Fernschreibmaschine ein einfaches Wählen eines fernen Teilnehmers ermöglicht wird.

Erfindungsgemäß wird die Aufgabe bei dem Verfahren der eingangs genannten Art gelöst durch folgende Verfahrensschritte:

a) falls als Wählzeichen eine Buchstabenkombination eingegeben wird, wird ein Speicher ausgelesen, in dem dem fernen Teilnehmer zugeordnete Buchstabenkombinationen und zugeordnete Wählzeichen gespeichert sind,

b) bei einer Übereinstimmung zwischen eingegebenen Buchstabenkombinationen und ausgelesenen Buchstabenkombinationen werden den ausgelesenen Wählzeichen zugeordnete Wählsignale erzeugt und zur Vermittlungsstelle übertragen.

Das Verfahren gemäß der Erfindung hat den Vorteil, daß es einen geringen Aufwand erfordert, da keine zusätzlichen Tasten an der Fernschreibmaschine erforderlich sind. Die Bedienung der Fernschreibmaschine beim Wählvorgang wird sehr vereinfacht, da häufig herzustellende Verbindungen durch die Eingabe weniger Buchstaben erreicht werden können. Die Buchstaben stellen zweckmäßigerweise mnemotechnische Abkürzungen des fernen Teilnehmers dar. Das Verfahren gemäß der Erfindung eignet sich dabei sowohl für die Erzeugung von Nummernschaltimpulsen als auch für ein- oder mehrstufige Codewahl.

Unter Verwendung der gespeicherten Wählzeichen ist es auch möglich, eine Rufwiederholung durchzuführen. Die Rufwiederholung wird in einfacher Weise dadurch erreicht, daß die Wählzeichen nach dem erneuten Betätigen der Anruftaste und dem Betätigen einer Wiederholtaste nochmals ausgelesen werden.

Es wäre denkbar, den Speicher als Festwertspeicher auszubilden. In diesem Fall könnten von der Fernschreibmaschine nur immer dieselben fernen Teilnehmer mittels der Kurzwahl angewählt werden. Es erweist sich jedoch als vorteilhaft, daß der Speicher als Schreib-Lesespeicher ausgebildet ist. Die Programmierung des Festwertspeichers erfolgt dann auf besonders einfache Weise, wenn die Buchstabenkombination und die zugeordneten Wählzeichen mittels der Tastatur in den Speicher eingegeben werden.

Eine Änderung des Inhalts des Speichers wird auf einfache Weise erreicht, wenn die Änderung der Buchstabenkombination und/oder der zugehörigen Wählzeichen nach dem Betätigen einer Sondertaste und der Eingabe der Buchstaben und/oder Ziffern mittels der Tastatur durchgeführt wird.

Für eine Überwachung des Wählvorgangs ist es günstig, wenn während des Wählens die entsprechende Buchstabenkombination und/oder die zugehörigen Wählzeichen am Drucker der Fernschreibmaschine abgedruckt werden.

Eine Überprüfung des Inhalts des Speichers wird auf einfache Weise dadurch erreicht, wenn nach dem Betätigen einer Taste der Inhalt des Speichers am Drucker abgedruckt wird.

Eine vorteilhafte Anordnung zur Durchführung des Verfahrens wird dadurch erreicht, daß eine Wählstufe vorgesehen ist, die einen Speicher enthält, in dem die Buchstabenkombinationen und die zugehörigen Wählzeichen gespeichert sind und daß ein Mikrorechner vorgesehen ist, der eine mittels der Tastatur eingegebene Buchstabenkombination mit gespeicherten Buchstabenkombinationen vergleicht und bei Gleichheit den zugeordneten Wählzeichen entsprechende Wählsignale erzeugt und daß die Wählstufe eine Schaltstufe enthält, über die Signale der Vermittlungsstelle und einer Grundelektronik der Fernschreibmaschine zugeführt werden und die mit einer Sende-Empfangseinheit versehen ist, über die die Wählzeichen dem Mikrorechner zugeführt werden.

Eine vorteilhafte Speicherung der Wählzeichen wird erreicht, wenn der Speicher als Halbleiterspeicher ausgebildet ist und mit einer Umschaltstufe versehen ist, die bei einer Unterbrechung der Stromversorgung der Fernschreibmaschine eine Batterie als Betriebsspannungsquelle zuschaltet.

Insbesondere ist es dabei vorteilhaft, wenn der Speicher Bestandteil des Mikrorechners ist.

Im folgenden wird eine Durchführung des erfindungsgemäßen Verfahrens anhand einer entsprechenden Anordnung beschrieben, die in den Zeichnungen dargestellt ist. Es zeigt

Fig. 1 ein Blockschaltbild einer Fernschreibmaschine,

Fig. 2 ein Blockschaltbild einer Wählstufe,

Fig. 3 ein Schaltbild einer in der Wählstufe vorhandenen Schaltstufe.

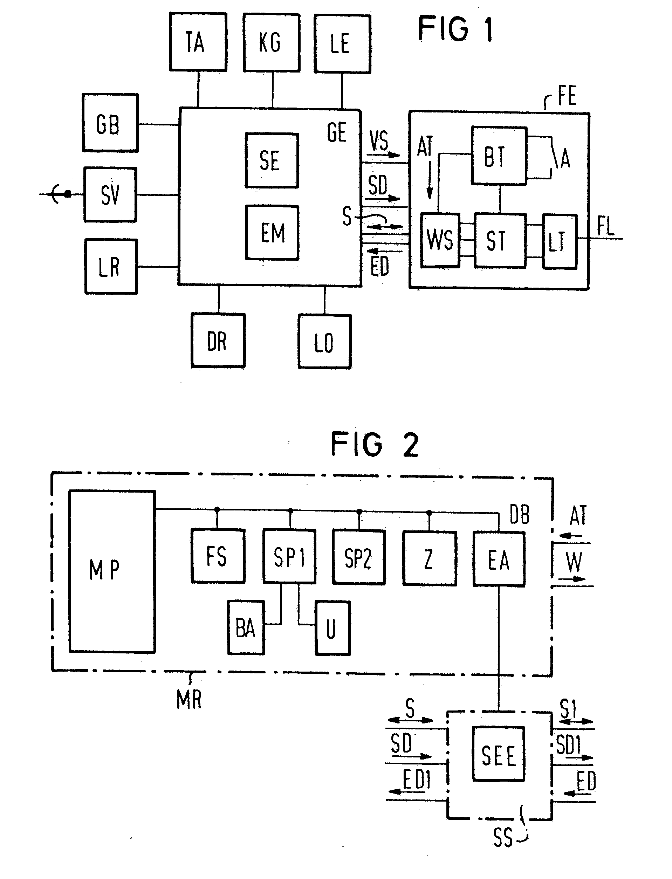

Die in Fig. 1 dargestellte Fernschreibmaschine, enthält eine Grundelektronik GE, die die zentrale Steuereinheit für alle logischen Funktionen darstellt. Sie enthält eine Sendeeinheit SE und eine Empfangseinheit EM. An der Sendeeinheit SE sind eine Tastatur TA, ein Kennungsgeber KG und ein Lochstreifenleser LE angeschlossen. An der Empfangseinheit EM sind ein Drucker DR und ein Lochstreifenlocher LO angeschlossen. An der Grundelektronik GE ist weiterhin ein Gerätebedienteil GB angeschlossen. Dieser enthält die Bedienungs- und Anzeigeelemente für die Gerätefunktionen, beispielsweise für das Aufheben einer Sperre der Tastatur TA, für das Auslösen des Kennungsgebers KG und für das Dauereinschalten des Lochers LO. Weiterhin ist die Grundelektronik GE mit einer Stromversorgung SV verbunden, die alle für den Betrieb der Fernschreibmaschine erforderlichen Spannungen und Ströme liefert. Außerdem ist ein Lautsprecher LR vorgesehen, der beim Erreichen eines Zeilenendes durch das Druckwerk oder beim Verbindungsaufbau akustische Signale erzeugt.

Die Verbindung zu einer Fernleitung FL wird mittels einer Fernschalteinheit FE hergestellt. Diese enthält einen Bedienteil BT, der die Bedienungs- und Anzeigeelemente für die Vermittlungsfunktion umfaßt. Ein derartiges Bedienungselement ist beispielsweise eine Anruftaste A. Der Bedienteil BT ist mit einer Wählstufe WS verbunden, die die Wählsignale, nämlich die Nummernimpulse oder die Codewahlsignale für das Wählen eines fernen Teilnehmers erzeugt. Weiterhin ist der Bedienteil BT mit einem Steuerteil ST verbunden, der die digitalen Schaltungen für die Vermittlungsfunktionen, wie beispielsweise für das Aufbauen und Auslösen einer Verbindung enthält. Dem Steuerteil ST ist ein Leitungsanpassungsteil LT nachgeschaltet, der die analogen Schaltungen für die Übertragung über die Fernleitung FL enthält.

Zwischen der Grundelektronik GE und der Fernschalteinheit FE werden die Sendedaten SD, die Empfangsdaten ED, Steuersignale S und Versorgungsspannungen VS übertragen. Ein Teil der Steuersignale S wird durch die Wählstufe WS zum Steuerteil ST durchgeschleift.

Beim Wählen des fernen Teilnehmers wird der Wählstufe WS nach dem Betätigen der Anruftaste A ein Signal AT zugeführt, das die Wählstufe WS für die Erzeugung der Wählsignale vorbereitet. Nach der Aufforderung zum Wählen durch die Vermittlungsstelle werden die Wählzeichen mittels der Tastatur TA eingegeben und als Sendedaten SD der Wählstufe WS zugeführt. Diese erzeugt in Abhängigkeit von den Sendedaten SD die Wählsignale und gibt sie über die Fernleitung FL an die Vermittelungsstelle ab.

Die Wählstufe WS enthält einen Speicher, in dem die aus Wählzeichen gebildeten Rufnummern von fernen Teilnehmern gespeichert sind, zu denen häufig eine Verbindung hergestellt werden soll. Die Wählzeichen sind Buchstabenkombinationen zugeordnet, die vorteilhafterweise eine mnemotechnische Abkürzung des jeweiligen fernen Teilnehmers darstellen. Wenn nach dem Betätigen der Anruftaste A die Vermittlungsstelle zum Wählen des fernen Teilnehmers auffordert und dann über die Tastatur TA der Fernschreibmaschine anstelle von Ziffern eine Buchstabenkombination eingegeben wird, die der Wählstufe WS in Form von Sendedaten SD zugeführt wird, stellt die Wählstufe WS fest, daß es sich um eine Kurzwahl handelt. Der Inhalt des Speichers wird nun ausgelesen und es wird geprüft, ob die entsprechende Buchstabenkombination im Speicher gespeichert ist. Wenn dies der Fall ist, werden in Abhängigkeit von den Wählzeichen Wählsignale erzeugt, die als Nummernschaltimpulse oder als Codewahlsignale über die Fernleitung FL übertragen werden.

Die in Fig. 2 dargestellte Wählstufe WS wird aus einem im Handel unter der Bezeichnung SKC 85 erhältlichen Mikrorechner MR und einer Schaltstufe SS gebildet. Der Mikrorechner MR enthält einen Mikroprozessor MP, an dem über einen Datenbus ein Festwertspeicher FS, Schreib-Lesespeicher SP1 und SP2, eine Zählstufe Z und eine Ein-Ausgabeeinheit EA angeschlossen sind. Der Festwertspeicher FS enthält das Mikroprogramm, während im Speicher SP1 die Buchstabenkombinationen und die zugehörigen Wählzeichen der fernen Teilnehmer gespeichert sind. Der Speicher SP2 ist als Arbeitsspeicher vorgesehen und die Zählstufe Z dient zum Erzeugen von vorgegebenen Zeitdauern. Die Ein-Ausgabeeinheit EA ist ein im Handel unter der Bezeichnung 8255 erhältlicher integrierter Schaltkreis, der die Verbindung des Mikroprozessors MP zu angeschlossenen Einheiten herstellt. Die Ein-Ausgabeeinheit EA ist mit dem Bedienteil BT und mit dem Steuerteil ST verbunden. Außerdem ist an ihr die Schaltstufe SS angeschlossen.

Ein wesentlicher Bestandteil der Schaltstufe SS ist eine Sende-Empfangseinheit SEE, die im Handel unter der Bezeichnung 8251 erhältlich ist. Außerdem enthält die Schaltstufe SS binäre Verknüpfungsglieder.

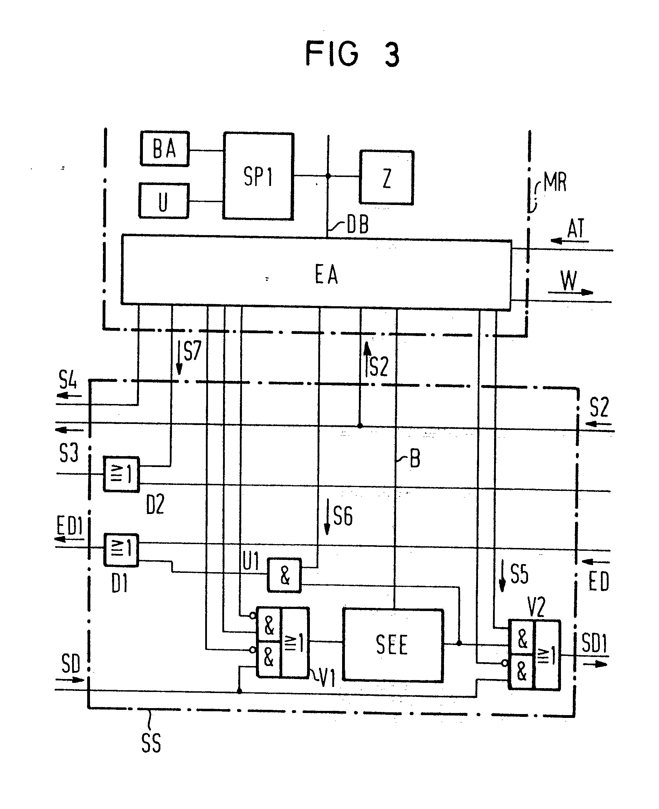

Weitere Einzelheiten der Wählstufe WS werden im Zusammenhang mit dem in Fig. 3 dargestellten Schaltbild der Schaltstufe SS beschrieben.

Die in Fig. 3 dargestellte Schaltstufe SS ist einerseits über einen Datenbus B und andererseits über eine Mehrzahl von Anschlußleitungen an der Ein-Ausgabeeinheit EA angeschlossen. Außerdem ist sie mit der Grundelektronik GE und dem Steuerteil ST verbunden.

Wenn am Bedienteil BT die Anruftaste A betätigt wird, wird das Signal AT der Ein-Ausgabeeinheit EA zugeführt. Im Mikrorechner MR wird damit ein dem Wählvorgang zugeordnetes Mi-kroprogramm aufgerufen. Wenn die Vermitt-lungsstelle zum Eingeben der Wählzeichen auffordert, werden dem Steuerteil ST ein Signal S2, das den Leitungsbetrieb in der Fernschreibmaschine einstellt und ein Signal NA zugeführt, das zur Abgabe von Nummernschaltimpulsen auffordert. Im folgenden wird angenommen, daß es sich um ein Wählen mit Hilfe von Nummernschaltimpulsen und nicht um eine Codewahl handelt. Für eine Codewahl gilt Entsprechendes.

Das Signal S2 wird als Signal S3 der Grundelektronik GE zugeführt. Diese gibt ihrerseits ein Signal S4 ab, das über ein UND-Glied U1 als Signal S5 dem Steuerteil ST zugeführt wird und der Vermittlungsstelle die Betriebsbereitschaft der Fernschreibmaschine anzeigt. Wenn die Wählzeichen eingegeben werden, gelangen diese als Sendedaten SD über ein Verknüpfungsglied V1 zur Sende-Empfangseinheit SEE. Dem Verknüpfungsglied V1 wird zu diesem Zweck ein Signal S6 zugeführt. Gleichzeitig wird die Weiterschaltung der Sendedaten SD durch ein Signal S7, das einem Verknüpfungsglied V2 zugeführt wird, gesperrt. Über den Bus B gelangen die Wählzeichen zum Mikrorechner MR. Dieser erzeugt unter Verwendung der Zählstufe Z als Nummernschaltimpulse dienende Wählsignale W und gibt sie an den Steuerteil ST ab.

Wenn als erstes Wählzeichen in Form von Sendedaten SD ein einem Buchstaben zugeordnetes Zeichen zur Schaltstufe SS übertragen wird, wird dieses Wählzeichen ebenfalls über das Verknüpfungsglied V1 und die Sende-Empfangseinheit SEE dem Mikrorechner MR zugeführt. Dieser stellt fest, daß es sich im folgenden um eine Kurzwahl handelt und die eigentlichen Wählzeichen für die Erzeugung der Wählsignale W dem Speicher Sp1 entnommen werden müssen. Der Speicher SP1 kann als Festwertspeicher oder als Schreib-Lesespeicher ausgebildet sein. In ihm sind beispielsweise 20 Rufnummern von fernen Teilnehmern mit jeweils 29 Wählzeichen gespeichert. Außerdem sind zugehörige Buchstabenkombinationen gespeichert, die vorzugsweise mnemotechnische Abkürzungen des fernen Teilnehmers darstellen. Der Speicher SP1 ist vorzugsweise als Halbleiterspeicher ausgebildet. Da derartige Halbleiterspeicher üblicherweise flüchtig sind, d. h. die in ihnen gespeicherte Information nach dem Abschalten der Betriebsspannung verlorengeht, ist an dem Speicher eine Batterie BA angeschlossen, die die Spannungsversorgung übernimmt, falls die Betriebsspannung der Fernschreibmaschine nicht mehr vorhanden ist. Die Betriebsspannung der Fernschreibmaschine wird durch eine Umschalteinheit U überwacht, die gegebenenfalls selbsttätig die Spannungsversorgung von der Betriebsspannung der Fernschreibmaschine auf die Batterie BA umschaltet.

Wenn der Mikrorechner MR während des Wählens in Form der Sendedaten SD die einer Buchstabenkombination zugeordneten Zeichen erhält, wird der Inhalt des Speichers SP1 ausgelesen und die dort gespeicherten Buchstabenkombinationen werden mit Hilfe des Mikrorechners MR mit den als Sendedaten SD zugeführten Buchstabenkombinationen verglichen. Falls die Buchstabenkombination im Speicher SP1 enthalten ist, erzeugt der Mikrorechner MR aus den entsprechenden Wählzeichen unter Verwendung der Zählstufe Z die Nummernschaltimpulse und gibt sie als Wählsignale W ab. Dem Mikrorechner MR kann ein weiterer Speicher nachgeschaltet sein, der als Rufwiederholspeicher dient und in dem die Wählzeichen zwischengespeichert werden. Falls die Verbindung zum fernen Teilnehmer nicht zustandekommt, kann nach einem erneuten Betätigen der Anruftaste und einer Wiederholtaste, beispielsweise der Taste für das Zeichen »+« der Inhalt dieses weiteren Speichers ausgelesen werden, so daß selbsttätig erneut die Wählsignale W erzeugt werden. Der weitere Speicher kann Bestandteil des Speichers SP1 sein oder er kann auch dadurch realisiert werden, daß die entsprechenden Speicher-stellen, in der die Wählzeichen eingespeichert waren, wiederholt ausgelesen werden.

Während des Wählvorgangs können die Wählzeichen am Drucker DR abgedruckt werden. Zu diesem Zweck können die Wählzeichen vom Ausgang der Sende-Empfangseinheit SEE mittels eines Signals S8 als Sendedaten SD1 zum Steuerteil ST abgegeben werden und dort als Empfangsdaten ED zurückgeführt werden und über ein ODER-Glied D1 als Empfangsdaten ED1 der Grundelektronik GE zugeführt werden.

Es ist auch möglich, die Wählzeichen über ein UND-Glied U2 mittels eines Signals S9 über das ODER-Glied D1 an die Grundelektronik GE zurückzuführen.

Falls der Speicher SP1 als Schreib-Lesespeicher ausgebildet ist, erfolgt das Einspeichern der Wählzeichen und der Buchstabenkombinationen zweckmäßigerweise unter Verwendung der Tastatur TA. Im vorliegenden Ausführungsbeispiel wird zunächst 3 x die Taste »Wer da?« betätigt. Als Quittierung für den Programmierbetrieb gibt der Drucker DR das Zeichen P aus. Anschließend werden die Buchstabenkombinationen eingegeben, die beispielsweise aus zwei Zeichen bestehen. Danach werden die entsprechenden Wählzeichen eingegeben. Bei einer mehrstufigen Wahl muß der Abschluß der Rufnummern jeweils durch das Zeichen » + « gekennzeichnet werden. Die Buchstaben und die Wählzeichen werden dabei als Sendedaten SD der Schaltstufe SS zugeführt und über den Bus B dem Mikrorechner MR angeboten, der sie in den Speicher SP1 einspeichert.

Die Änderung von bereits gespeicherten Wählzeichen erfolgt dadurch, daß die entsprechende Buchstabenkombination eingegeben wird und daraufhin am Drucker DR diese und die zugehörigen Wählzeichen und danach ein Trennungsstrich ausgegeben werden. Nach Abdruck des Zeichens »Trennungsstrich« wird die neue Rufnummer eingegeben. Nach dem Betätigen der Tasten »Wagenrücklauf« oder »Zeile« wird die entsprechende Änderung im Speicher SP1 eingespeichert. Entsprechendes gilt bei der Eingabe einer neuen Buchstabenkombination. Dabei wird das Einspeichern mehrerer Rufnummern unter derselben Buchstabenkombination verhindert, indem die Rufnummer sofort nach Eingabe der bereits bestehenden Buchstabenkombination ausgedruckt wird.

Um den Inhalt des Speichers SP1 überprüfen zu können, ist es auch möglich, diesen am Drucker DR auszugeben.

Zu diesem Zweck wird im Programmierbetrieb die Taste »?« betätigt. Am Drucker DR werden dann alle gespeicherten Buchstabenkombinationen und die zugehörigen Wählzeichen ausgegeben.

Nach einem Wechsel der Batterie BA kann sich der Inhalt des Speichers SP1 derart verändert haben, daß der Aufruf einer Speicherzeile durch Eingabe der Buchstabenkombination nicht mehr möglich ist. Zweckmäßigerweise wird in diesem Fall der gesamte Speicherinhalt gelöscht und der Speicher anschließend neu beschrieben. Das Löschen erfolgt dadurch, daß mittels der Tastatur zunächst eine Umschaltung in die Ziffernebene erfolgt und anschließend die Zeichen »reset« eingegeben werden. Anschließend wird das Löschen durchgeführt und mit dem Ausdruck »reset« am Drucker DR quittiert. Wenn im Programmierbetrieb einmal das Zeichen »Wer da?« eingegeben wird, wird der Programmierbetrieb beendet und am Drucker DR werden die Zeichen »end p« ausgegeben. Die Fernschreibmaschine befindet sich dann wieder im Lokalbetrieb.

## Patentansprüche

1. Verfahren zum Erzeugen von Wählsignalen in einer Fernschreibmaschine, bei dem nach dem Betätigen einer Anruftaste (A) an der Fernschreibmaschine eine Vermittlungsstelle zum Eingeben von Wählzeichen auffordert, die einem fernen Teilnehmer zugeordnet sind, bei dem die Eingabe der Wählzeichen über die Tastatur (TA) der Fernschreibmaschine erfolgt, bei dem während des Wählvorgangs in Abhängigkeit von den Wählzeichen Wählsignale erzeugt werden und bei dem falls als Wählzeichen Ziffern eingegeben werden, diese in Wählsignale umgesetzt werden, gekennzeichnet durch folgende Verfahrensschritte:

a) falls als Wählzeichen eine Buchstabenkombination eingegeben wird, wird ein Speicher (SP1) ausgelesen, in dem dem fernen Teilnehmer zugeordnete Buchstabenkombinationen und zugeordnete Wählzeichen gespeichert sind,

b) bei einer Übereinstimmung zwischen eingegebenen Buchstabenkombinationen und ausgelesenen Buchstabenkombinationen werden den ausgelesenen Wählzeichen zugeordnete Wählsignale (W) erzeugt und zur Vermittlungsstelle übertragen.

2. Verfahren nach Anspruch 1, dadurch gekennzeichnet, daß die Wählzeichen nach dem erneuten Betätigen der Anruftaste und dem Betätigen einer Wiederholtaste nochmals ausgelesen werden.

3. Verfahren nach Anspruch 1 oder 2, dadurch gekennzeichnet, daß die Buchstabenkombinationen und die zugeordneten Wählzeichen mittels der Tastatur (TA) in den Speicher (SP1) eingegeben werden.

4. Verfahren nach Anspruch 3, dadurch gekennzeichnet, daß die Änderung der Buchstabenkombination und/oder der zugehörigen Wählzeichen nach dem Betätigen einer Sondertaste und der Eingabe der Buchstaben und/oder Ziffern mittels der Tastatur (TA) durchgeführt wird.

5. Verfahren nach einem der Ansprüche 1 bis 4, dadurch gekennzeichnet, daß während des Wählens die entsprechende Buchstabenkombination und/oder die zugehörigen Wählzeichen am Drucker (DR) der Fernschreibmaschine abgedruckt werden.

6. Verfahren nach einem der Ansprüche 1 bis 5, dadurch gekennzeichnet, daß nach dem Betätigen einer Taste der Inhalt des Speichers (SP1) am Drucker (DR) abgedruckt wird.

7. Anordnung zur Durchführung des Verfahrens nach Anspruch 1, dadurch gekennzeichnet, daß eine Wählstufe (WS) vorgesehen ist, die einen Speicher (SP1) enthält, in dem die Buchstabenkombinationen und die zugehörigen Wählzeichen gespeichert sind und daß ein Mikrorechner (MR) vorgesehen ist, der eine mittels der Tastatur (TA) eingegebene Buchstabenkombination mit gespeicherten Buchstabenkombinationen vergleicht und bei Gleichheit den zugeordneten Wählzeichen entsprechende Wählsignale (W) erzeugt.

8. Anordnung nach Anspruch 7, dadurch gekennzeichnet, daß die Wählstufe (WS) eine Schaltstufe (SS) enthält, über die Signale der Vermittlungsstelle und einer Grundelektronik (GE) der Fernschreibmaschine zugeführt werden und die mit einer Sende-Empfangseinheit (SEE) versehen ist, über die die Wählzeichen dem Mikrorechner (MR) zugeführt werden.

9. Anordnung nach Anspruch 7 oder 8, dadurch gekennzeichnet, daß der Speicher (SP1) als Halbleiterspeicher ausgebildet ist und mit einer Umschaltstufe (U) versehen ist, die bei einer Unterbrechung der Stromversorgung der Fernschreibmaschine eine Batterie (BA) als Betriebsspannungsquelle zuschaltet.

10. Anordnung nach Anspruch 9, dadurch gekennzeichnet, daß der Speicher (SP1) Bestandteil des Mikrorechners (MR) ist.

## Claims

1. Method for the generation of dialling signals in a teleprinter, wherein, following the actuation of a call key (A) on the teleprinter an exchange makes a request for the input of dialling characteristics which are assigned to a remote subscriber, wherein the dialling characteristics are input via the keyboard (TA) of the teleprinter, wherein dialling signals are produced during the dialling operation in dependence upon the dialling characteristics, and wherein, if digits are input as dialling characteristics, these are converted into dialling signals, characterised by the following method steps:

a) if a letter combination is input as dialling characteristics, a store (SP1) is read out which stores letter combinations assigned to the remote subscriber and assigned dialling characteristics,

b) in the event of identity between input letter combinations and read-out letter combinations, dialling signals (W) assigned to the read-out dialling characteristics are produced and are transmitted to the exchange.

2. Method as claimed in claim 1, characterised in that the dialling characteristics are read out again following the reactuation of the call key and the actuation of a repeat key.

3. Method as claimed in claim 1 or 2, characterised in that the letter combination and the assigned dialling characteristics are input into the store (SP1) by means of the keyboard (TA).

4. Method as claimed in claim 3, characterised in that the change of the letter combination and/or of the associated dialling characteristics is carried out following the actuation of a special key and input of the letters and/or digits by means of the keyboard (TA).

5. Method as claimed in one of the claims 1 to 4, characterised in that during the dialling operation the corresponding letter combination and/or the assigned dialling characteristics are printed out on the printer (DR) of the teleprinter.

6. Method as claimed in one of the claims 1 to 5, characterised in that following the actuation of a key, the content of the store (SP1) is printed on the printer (DR).

7. Arrangement for the execution of the method claimed in claim 1, characterised in that a dialling stage (WS) is provided which includes a store (SP1) in which the letter combinations and the associated dialling characteristics are stored, and that a micro-computer (MR) is provided which compares a letter combination input by means of the keyboard (TA) with stored letter combinations and in the event of identity produces dialling signals (W) which correspond to the assigned dialling characteristics.

8. Arrangement as claimed in claim 7, characterised in that the dialling stage (WS) includes a switching stage (SS) via which signals are fed to the exchange and to a basic electronic unit (GE) of the teleprinter, and which is provided with a transmitting-receiving unit (SEE) via which the dialling characteristics are supplied to the micro-computer (MR).

9. Arrangement as claimed in claim 7 or claim 8, characterised in that the store (SP1) is a semiconductor store and is provided with a switch-over stage (U) which, in the event of an interruption in the current supply to the teleprinter, connects a battery (BA) as operating voltage source.

10. Arrangement as claimed in claim 9, characterised in that the store (SP1) forms part of the micro-computer (MR).

## Revendications

1. Procédé pour produire des signaux de sélection dans un télescripteur, selon lequel après l'actionnement d'une touche d'appel (A) sur le télescripteur, un central demande l'introduction de caractères de sélection qui sont associés à un abonné éloigné, et selon lequel l'introduction des caractères de sélection est réalisée par l'intermédiaire du clavier (TA) du télescripteur, et selon lequel pendant l'opération de sélection, des signaux de sélection sont produits en fonction des caractères de sélection et dans lequel, dans le cas de l'introduction de chiffres en tant que caractères de sélection, ces chiffres sont convertis en signaux de sélection, caractérisé par les phases opératoires suivantes:

a) dans le cas où l'on introduit comme caractères de sélection une combinaison de lettres, il se produit une lecture dans une mémoire (SP1), dans laquelle se trouvent mémorisées des combinaisons de lettres associées à l'abonné éloigné et des caractères de sélection associés;

b) dans le cas de la coïncidence entre les combinaisons de lettres indroduites et les combinaisons de lettres lues, des signaux de sélection (W) associés aux caractères lus de sélection sont produits et sont transmis au central.

2. Procédé suivant la revendication 1, caractérisé par le fait que les caractères de sélection sont à nouveau lus après un actionnement réitéré de la touche d'appel et après l'actionnement d'une touche de répétition.

3. Procédé suivant la revendication 1 ou 2, caractérisé par le fait que la combinaison de lettres et les caractères de sélection associés sont introduits à l'aide du clavier (TA) dans la mémoire (SP1).

4. Procédé suivant la revendication 3, caractérisé par le fait que la modification de la combinaison de lettres et/ou les caractères associés de sélection est effectiée après l'actionnement d'une touche spéciale et l'introduction des lettres et/ou des chiffres à l'aide du clavier (TA).

5. Procédé suivant l'une des revendications 1 à 4, caractérisé par le fait que pendant la sélection, la combinaison correspondante de lettres et/ou les caractères de sélection associés sont imprimés dans l'imprimante (DR) du télescripteur.

6. Procédé suivant l'une des revendications 1 à 5, caractérisé par le fait qu'après l'actionnement d'une touche, le contenu de la mémoire (SP1) est imprimé sur l'imprimante (DR).

7. Dispositif pour la mise en oeuvre du procédé suivant la revendication 1, caractérisé par le fait qu'il est prévu un étage de sélection (WS), qui contient une mémoire (SP1) dans laquelle les combinaisons de lettres et les caractères de sélection associés sont mémoires, et qu'il est prévu un microcalculateur (MR) qui compare une combinaison de lettres introduite au moyen du clavier (TA) à des combinaisons mémorisées de lettres et produit, en cas d'égalité, des signaux de sélection (W) correspondant aux caractères de sélection associés.

8. Dispositif suivant la revendication 7, caractérisé par le fait que l'étage de sélection (WS) contient un étage de commutation (FS), par l'intermédiaire duquel les signaux sont envoyés au central et un système électronique de base (GE) du télescripteur, et qui est muni d'une unité d'émission/réception (SEE), par l'intermédiaire de laquelle les caractères de sélection sont envoyés au microcalculateur (MR).

9. Dispositif suivant la revendication 7 ou 8, caractérisé par le fait que la mémoire (SP1) est réalisée sous la forme d'une mémoire à semiconducteurs et est munie d'un étage de commutation (U) qui, dans le cas d'une interruption de l'alimentation en courant du télescripteur, branche une batterie (BA) en tant que source de tension d'alimentation.

10. Dispositif suivant la revendication 9, caractérisé par le fait que la mémoire (SP1) fait partie du microcalculateur (MR).

FIG 1

FIG 2

# FIG 3